# EUROPEAN PATENT APPLICATION

(11) **EP 1 970 278 A1**
(43) Date of publication of application: **17.09.2008**
(21) Application number: 07103902.8
(22) Date of filing: 12.03.2007
(51) Int. Cl.: B61K 9/08

(54) **Method and assembly for surveying a railway section**

(71) Applicant: Strukton Railinfra Installatietechniek B.V., 7556 PE Hengelo (NL)
(72) Inventor: Hensen, Robertus Maria, 7621 WH, Borne (NL)
(74) Representative: Metman, Karel Johannes

(57) **Abstract**

A method for surveying a railway section is provided comprising the steps: providing surveying means which are movable along a track extending substantially in parallel and elevated relative to said railway section; moving said surveying means along said track while surveying the railway section and producing images thereof, and analyzing said images. An assembly for surveying a railway section is provided too, with surveying means for producing images of said railway section; a track positioned substantially in parallel and elevated relative to said railway section for moving therealong the surveying means, and analyzing means for analyzing the images produced by the surveying means.

## Description

The invention firstly relates to a method for surveying a railway section.

For safeguarding a constant safety of a railway system, certain railway sections of such railway system need to be surveyed on a regular basis. During such a survey the integrity of specific parts of the railway section (for example points, compensation welds, rails) is checked.

Nowadays, such a survey basically is carried out in two different ways: by means of a railway vehicle with integrated surveying means, or by means of railway employees walking along said railway section. The use of specialised railway vehicles is expensive because of the cost of developing and constructing such a railway vehicle, and because of the fact that such a railway vehicle has to be relocated from a railway section already surveyed towards a railway section which is to be surveyed. Moreover, the use of such a railway vehicle interferes with the normal, scheduled use of said railway section by a railway company.

Surveying the railway section by employees has the disadvantage, that this manner of surveying is very dangerous (on average three on every ten thousand employees working at a railway section are killed). Furthermore, a surveyance by means of employees is not very reproducible, and the results strongly depend on the skills of the surveyor.

It is a first object of the present invention to provide an improved method for surveying a railway section.

Thus, in accordance with the present invention, a method for surveying a railway section comprises the following steps:
- providing surveying means which are movable along a track extending substantially in parallel and elevated relative to said railway section;
- moving said surveying means along said track while surveying the railway section and producing images thereof, and
- analyzing said images.

For realising the method in accordance with the present invention neither a specialised railway vehicle is needed, neither are employees walking along the railway section. Surveying the railway section with this method is possible without interfering with the normal, scheduled operation of the railway system by a railway company. The present method is completely safe, because regular trains cannot collide with any specialised rail vehicle which is surveying the railway section or with surveyors walking on the railway section.

Although the images produced by the surveying means could be analysed in real time, it is preferred that said images are recorded for a subsequent analysis. This offers the possibility of analysing the images at a later stage, and more thoroughly.

Before the images are analysed, they could be directly transmitted to a processing device. However, it also is possible that the images firstly are recorded in the surveying means and only after completion of the surveying sequence (that means, after surveying the entire railway section) are downloaded to a processing device.

Moving the surveying means along said track may comprise the step of remote-controlling the surveying means. Such a remote-controlling offers the advantage of a less complicated and less cumbersome construction with fewer parts. Moreover, like this it is possible to control a number of surveying means from a central control room or alike.

During such a remote-controlling of the surveying means, not only the lengthwise position of the surveying means along said track could be controlled, but also the attitude of the surveying means at any such lengthwise position. For example, when the surveying means comprise a camera, such attitude could mean the pan, tilt and zoom of such a camera. However, when different surveying means are used, the attitude may relate to other parameters.

When, in accordance with a preferred embodiment of the method according to the present invention, the step of moving the surveying means along said track comprises the step of determining the position of the surveying means along said track, the relation between the produced images and the position along the railway section is well-defined.

For example, GPS could be used for determining such a position of the surveying means along said track (or, consequently, along said railway section).

Preferably, the step of moving the surveying means along said track comprises moving said surveying means to and fro along said track. This means, that the surveying means only survey a specific part or section of a railway system, i.e. said railway section. Like this, when for example using a remote-controlled surveying means, it is prevented that the surveying means gets out of reach of a transmitter or receiver.

The invention secondly relates to an assembly for surveying a railway section, which in accordance with the present invention is characterised by
- surveying means for producing images of said railway section;
- a track positioned substantially in parallel and elevated relative to said railway section for moving therealong the surveying means, and
- analyzing means for analyzing the images produced by the surveying means.

The surveying means produce images of the railway section. Such surveying means can come in many different ways, but preferably comprise a movable camera, such as for example a PTZ-camera (Pan-Tilt-Zoom camera). The images produced may be images which are directly represented by means of a monitor or alike, but also may comprise electronic images which are processed by electronic processing devices without being converted into really visible images.

The track is positioned substantially in parallel and elevated relative to the railway section. Because of such a parallel position, extremely reproducible images are produced. The elevated position assures, that the railway section is properly surveyed over its entire width (or transverse direction).

The type of analysing means depends on the type of images produced by the surveying means. Further, the type of analysis will depend on the type of surveyance (for example, points can be surveyed with respect to the constructional integrity thereof, but it is also possible to survey or measure the distance between the two rails of a railway track).

Preferably, the track comprises at least one profiled member extending along said railway section and a carriage supported by said profiled member and supporting the surveying means. Such a track defines a very simple, yet nevertheless extremely effective manner of guiding the surveying means in a well-defined and reproducable manner along the railway section, thus helping in producing reproducable images.

For further improving the stability of the carriage, the track may comprise two parallel profiled members which each cooperate with respective correspondingly profiled rollers of the carriage.

When, in such an embodiment, the carriage is provided with and driven by an electric motor, the profiled members could constitute the power leads for said electric motor. Then, such profiled members combine two tasks: supporting the carriage and supplying power to the carriage. It is noted, that in such a case not only an electric motor could be provided with power, but also other components on the carriage, such as the surveying means.

Examples of profiled members comprise tensioned cables or wires and rods with, for example, a circular cross-section.

In most events such profiled members will be metallic, and will have a considerable coefficient of expansion. Because railway sections undergo large temperature variations, the resultant expansion of the profiled members will be considerable. Therefore, in another preferred embodiment of the assembly according to the present invention, each profiled member comprises a number of subsequent separate lengths connected to each other by thermal expansion compensating devices.

When the assembly in accordance with the present invention is applied to an electrified railway section, the track may be attached to the overhead contact wire portals. No separate support devices for the track are needed, such that the cost of the assembly can be kept as low as possible. The manner, in which the track is attached to such portals may be the same as the manner (suspension bridge) in which the overhead contact wires are attached thereto.

Then, preferably, the track is positioned outside said overhead contact wire portals alongside said railway section. This makes the accessibility, and thus the maintenance of the track very easy.

Further, when applied to an electrified railway section, the track preferably is positioned above the level of the overhead contact wires. As a result is does not interfere with passing trains, even when it is positioned directly above the railway track (inside the portals), and not alongside it.

Preferably, the surveying means are remote-controlled. This makes the assembly according to the present invention extremely versatile and fit for control from a remote location (such as a control room).

For obtaining a relation between the position of the surveying means and thus the exact location along the railway section and the images produced, means for determining the position of the surveying means could be provided, such as for example GPS.

Finally, the assembly in accordance with the present invention can be provided with an access point (gateway) to the Internet. As a result, the processing and analysis of the produced images can occur at any specific location remote from the surveyed railway section. Thus, a centralised control room can be used for surveying several railway sections.

Hereinafter the invention will be elucidated while referring to the drawing. In which an embodiment of an assembly in accordance with the present invention is illustrated.
Figure 1 shows, schematically and in a cross-section, part of a railway section incorporating an assembly for surveying said railway section;
figure 2 illustrates a schematical impression of a system for surveying a railway section;
figure 3 shows, schematically, a side elevational view of a railway section comprising an assembly in accordance with the present invention;
figure 4 shows, schematically, an embodiment of a thermal expension compensating device;
figure 5 shows, in a schematical cross-section, the cooperation between a device as illustrated in figure 4 with a carriage, and
figure 6 illustrates, again schematically, in a side elevational view an embodiment of a carriage.

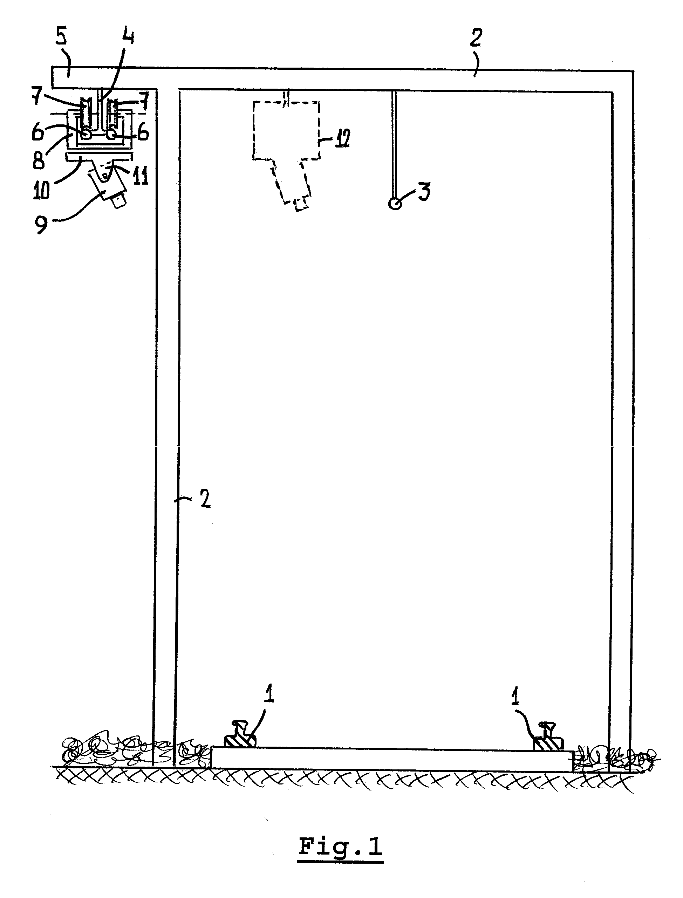

Firstly referring to figure 1, part of a railway section is illustrated in cross-section. Visible are the rails 1 of a railway track, and a portal 2 for supporting an overhead contact wire 3. It is noted that although only one rail track is illustrated, the present invention also relates to railway sections with more than one railway track positioned alongside each other. Thus a corresponding number of overhead wires 3 could be supported by the portals 2 which, then, would be wider.

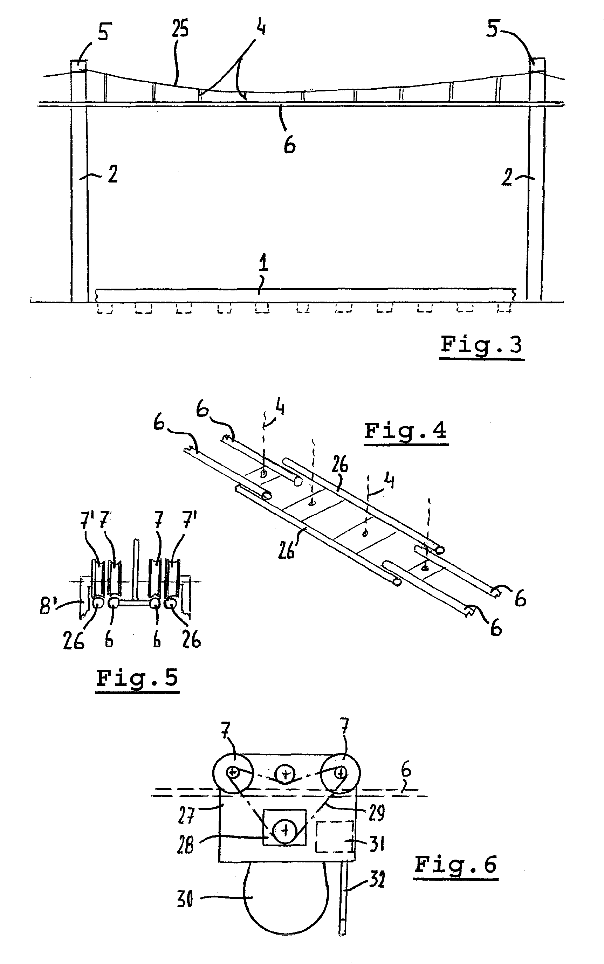

By means of support members 4 which (in a manner shown in more detail in figure 3) are attached to extensions 5 of the portals 2, two profiles members 6 (for example rods or tubes) are provided at a fixed position relative to the portal 2. Rollers 7 engage the profiled members 6 and support a carriage 8.

The carriage 8 is provided with surveying means, for example a camera 9 for surveying the components (such as points, welds, rails) of the railway section.

The carriage 8 is movable to and fro along the track defined by the profiled members 6 (i.e. in a direction perpendicularly to the drawing in figure 1). As a result, the camera 9 can survey the entire railway section. It has been indicated schematically, that the carriage 8 is provided with a turntable 10 provided with arms 11 between which the camera 9 may pivot. As a result, the camera 9 may carry out a panning motion as well as a tilting motion. Furthermore, as is known per se, the camera 9 may have a zooming function (PTZ-camera, Pan-Til-Zoom).

It is noted, that the camera 9 only defines one possible embodiment of surveying means, and that also other surveying means could be applied.

It has been indicated clearly in figure 1, that the camera 9 is positioned at an elevated position relative to the railway section and that the track defined by the profiled members 6 extends substantially in parallel to said railway section. Furthermore, it appears from figure 1, that the track, and therefore the surveying means, is positioned outside the overhead contact wire portal 2 alongside said railway section. However, it is possible too, that the track is positioned above the railway section, as indicated schematically by outline 12 in figure 1.

The movement of the carriage 8 along the profiled members 6 may be caused by an electric motor (not illustrated here, but elucidated later). For powering such an electric motor (and, if needed, for powering components of the assembly positioned on the carriage, for example the surveying means) power could be supplied by means of the profiled members 6.

The carriage 8 and its components can be remote-controlled, such that no connecting wires connecting the carriage and its components to control means, are needed. In view of the reach of a transmitter-receiver assembly for such a remote-control, generally the carriage 8 will move to and fro over a limited distance, for example ten kilometer. Then, for surveying an entire railway track, a number of assemblies as illustrated in figure 1 will be applied in succession to each other along the railway system.

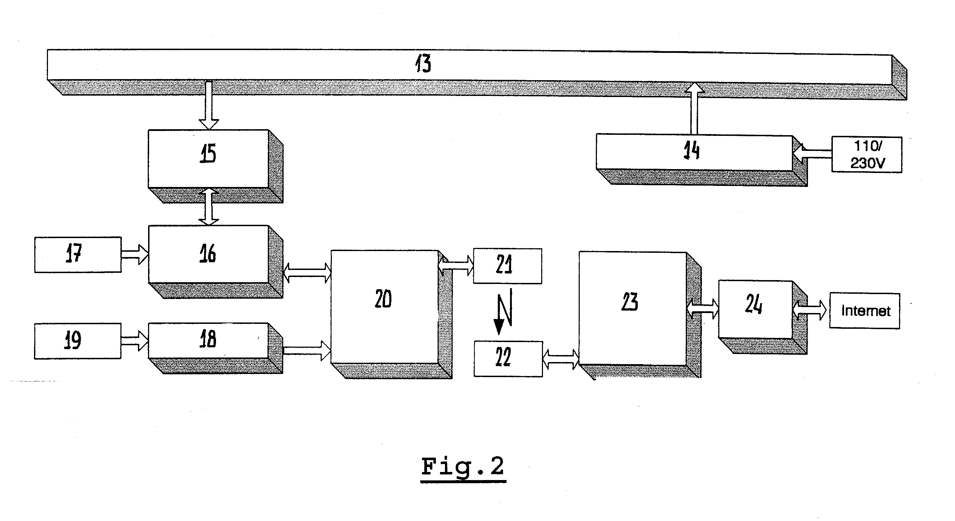

Figure 2 shows schematically components of a possible embodiment of a surveying system including the assembly in accordance with the present invention, and their mutual relations. Reference number 13 indicates a track, for example as defined by the profiled members 6 in figure 1. A feeding station 14 connects (and possible converts) power to the track 13. Reference number 15 indicates the carriage 15 (with its components, such as for example an electric drive motor). The surveying means (for example PTZ-camera 9) are indicated by reference number 16 and are positioned on the carriage 15. The image recorded by the surveying means 16 is indicated by reference number 17. Further means 18 for determining the position of the carriage 15 (and surveying means 16) along the railway section are represented (for example a GPS-system). These position determining means 18 are provided with an antenna 19.

The carriage 15 further is provided with a wireless communication device 20 having an antenna 21. The antenna 21 of the wireless communication device 20 communicates with an antenna 22 of a ground station 23 for wireless communication. In the embodiment illustrated in figure 2, said ground station 23 comprises a gateway 24 for a connection with the Internet.

The connection with the Internet enables operators to remote-control the function of the entire system. At a desired location, for example a control room, an operator may generate control signals which, by means of the ground station 23 and wireless communication device 20 reach the surveying means 16, such that these surveying means 16 (for example, camera 9) are operated in such a manner as to record the desired image 17 of the respective railway section.

However, the wireless communication also allows a transfer of the data from the surveying means to the ground station for a further analysis or processing. The generated image 17 may be transmitted directly to the ground station for a real time processing by processing means not shown further. However, it is also possible that storage means (not illustrated) are provided on the carriage 15 for recording said image.

Figure 3 shows schematically the manner, in which the profiled members 6 might be supported by the portals 2. A support cable 25 is attached to the extensions 5 of the portals 2 and supports the profiled members 6 through the support members 4 in the manner of a suspension bridge.

Because, generally, a railway section extends in an environment experiencing large temperature differences, the track will experience large thermal expansions. To compensate for such large thermal expansions, thermal expansion compensating devices may be needed. An example of such a a compensating device has been illustrated schematically in figure 4. Two pairs of profiled members 6 are separated by a gap, which gap is spanned by a pair of additional profiled members 26 overlapping the ends of the respective pairs of profiled members 6. During a thermal expansion of the profiled members 6 the overlap between said profiled members 6 and the additional profiled members 26 will change, such that a compensation is obtained.

Figure 5 shows, schematically, a cross-section through part of a carriage 8' having rollers 7 which will cooperate with the profiled members 6, and rollers 7' which will cooperate with the additional profiled members 26.

Finally, reference is made to figure 6, in which, again schematically, a possible embodiment of a carriage is illustrated. A housing 27 supports rollers 7 which will cooperate with profiled members 6 of the track. An electric motor 28 drives a belt 29 which engages the rollers 7, thus providing the movement of the carriage along the track 6. A protective covering 30 covers the surveying means (not shown) such that the operation of such surveying means is independent from environmental conditions.

Reference number 31 schematically indicates control means, processing means, means for determining the position of the carriage etcetera. Finally an antenna 32 is illustrated for a wireless communication with external means, for example a ground station.

It is noted, that the invention is not limited to the described embodiments, which may be varied widely within the scope of the invention as defined by the appending claims.

## Claims

1. Method for surveying a railway section, **characterised by** the following steps:
- providing surveying means which are movable along a track extending substantially in parallel and elevated relative to said railway section;
- moving said surveying means along said track while surveying the railway section and producing images thereof, and
- analyzing said images.

2. Method according to claim 1, wherein the step of producing images of the railway section comprises recording said images for a subsequent analysis.

3. Method according to claim 1 or 2, wherein the step of analyzing said images is preceeded by the step of transmitting the images to a processing device.

4. Method according to any of the previous claims, wherein the step of moving the surveying means along said track comprises the step of remote-controlling the surveying means.

5. Method according to claim 4, wherein the step of remote-controlling the surveying means comprises remote-controlling the lengthwise position of the surveying means along said track as well as remote-controlling the attitude of the surveying means at any such lengthwise position.

6. Method according to any of the previous claims, wherein the step of moving the surveying means along said track comprises the step of determining the position of the surveying means along said track.

7. Method according to claim 6, wherein the determination of the position of the surveying means along said track occurs by GPS.

8. Method according to any of the previous claims, wherein the step of moving the surveying means along said track comprises moving said surveying means to and fro along said track.

9. Assembly for surveying a railway section, **characterised by**
- surveying means for producing images of said railway section;
- a track positioned substantially in parallel and elevated relative to said railway section for moving therealong the surveying means, and
- analyzing means for analyzing the images produced by the surveying means.

10. Assembly according to claim 9, wherein the track comprises at least one profiled member extending along said railway section and a carriage supported by said profiled member and supporting the surveying means.

11. Assembly according to claim 10, wherein the track comprises two parallel profiled members which each cooperate with respective correspondingly profiled rollers of the carriage.

12. Assembly according to claim 11, wherein the carriage is provided with and driven by an electric motor and wherein the profiled members constitute the power leads for said electric motor.

13. Assembly according to any of the claims 9-12, wherein the profiled members are tensioned cables or wires.

14. Assembly according to any of the claims 9-12, wherein the profiled members are rods with a circular cross-section.

15. Assembly according to any of the claims 10-14, wherein each profiled member comprises a number of subsequent separate lengths connected to each other by thermal expansion compensating devices.

16. Assembly according to any of the claims 9-15 and applied to an electrified railway section, wherein the track is attached to the overhead contact wire portals.

17. Aseembly according to claim 16, wherein the track is positioned outside said overhead contact wire portals alongside said railway section.

18. Assembly according to any of the claims 9-17 and applied to an electrified railway section, wherein the track is positioned above the level of the overhead contact wires.

19. Assembly according to any of the claims 9-18, wherein the surveying means comprise a movable camera, such as for example a PTZ-camera.

20. Assembly according to any of the claims 9-19, wherein the surveying means are remote-controlled.

21. Assembly according to any of the claims 9-20, further comprising means for determining the position of the surveying means along said railway section, such as for example GPS.

22. Assembly according to any of the claims 9-21, further comprising an access point to the internet.
